# EUROPEAN PATENT APPLICATION

(11) **EP 4 254 293 A1**
(43) Date of publication of application: **04.10.2023**
(21) Application number: 22197484.3
(22) Date of filing: 23.09.2022
(51) Int. Cl.: G06Q 10/107, H04L 51/08, G06F 40/169, G06F 16/23

(54) **PROGRAM, INFORMATION PROCESSING APPARATUS, METHOD FOR PROCESSING INFORMATION**

(30) Priority: 29.03.2022 JP 2022053778
(71) Applicant: FUJIFILM Business Innovation Corp., Minato-ku Tokyo (JP)
(72) Inventor: HORIGANE, Ryuichi, Yokohama-shi (JP)
(74) Representative: Haseltine Lake Kempner LLP

(57) **Abstract**

A program causing a computer to execute a process includes analyzing a character string of a message accompanying an electronic document and performing processing relating to viewing of the electronic document on a basis of a result of the analyzing.

## Description

### Background

### (i) Technical Field

The present disclosure relates to a program, an information processing apparatus, and a method for processing information.

### (ii) Related Art

Japanese Unexamined Patent Application Publication No. 2019-16288 discloses a technique for facilitating checking of conclusions by giving attributes indicating types of comments on electronic documents.

Japanese Unexamined Patent Application Publication No. 2007-199768 discloses a technique for preventing a user from overlooking a message including an instruction or a request to a receiver.

### Summary

A message accompanying an electronic document might include a request to a reader. Viewing of a certain page or part of an electronic document or viewing of a related electronic document, for example, might be requested via a message. In order to fulfill such a request, however, a user who is a reader needs to perform an operation himself/herself.

Accordingly, it is an object of the present disclosure to provide reduction in an operational burden on a reader compared to when the reader needs to perform an operation according to a message accompanying an electronic document.

According to a first aspect of the present disclosure, there is provided a program causing a computer to execute a process including analyzing a character string of a message accompanying an electronic document and performing processing relating to viewing of the electronic document on a basis of a result of the analyzing.

According to a second aspect of the present disclosure, there is provided the program according to first aspect, in which, in the performing, the processing relating to the viewing of the electronic document is performed on condition that a predetermined operation is detected.

According to a third aspect of the present disclosure, there is provided the program according to the second aspect, in which the predetermined operation is selecting or opening of the message.

According to a fourth aspect of the present disclosure, there is provided the program according to the second aspect, in which the predetermined operation is selecting of the character string included in the message.

According to a fifth aspect of the present disclosure, there is provided the program according to any one of the first to fourth aspects, in which, in the performing, if the character string includes content relating to the viewing of the electronic document, the processing is performed.

According to a sixth aspect of the present disclosure, there is provided the program according to the fifth aspect, in which, in the performing, if the character string includes a page number, processing for displaying a corresponding page of the electronic document is displayed.

According to a seventh aspect of the present disclosure, there is provided the program according to the fifth or sixth aspect, the process further including displaying characters of the character string indicating the content relating to the viewing of the electronic document in a display mode different from a display mode for other characters of the character string.

According to an eighth aspect of the present disclosure, there is provided the program according to the first or fifth aspect in which, in the performing, if the character string does not include content relating to the viewing of the electronic document, the processing is not performed.

According to a ninth aspect of the present disclosure, there is provided the program according to any one of the first to eighth aspects, in which the message is associated with the electronic document in one-to-one correspondence.

According to a tenth aspect of the present disclosure, there is provided the program according to any one of the first to ninth aspects, in which, in the performing, the processing relating to the viewing of the electronic document is performed on a basis of a result of an analysis of a certain character string specified by a user.

According to an eleventh aspect of the present disclosure, there is provided the program according to any one of the first to tenth aspects, in which a database manages association between the message and the electronic document.

According to a twelfth aspect of the present disclosure, there is provided the program according to any one of the first to tenth aspects, in which the message is a file and attached to an email along with the electronic document.

According to a thirteenth aspect of the present disclosure, there is provided the program according to any one of the first to tenth aspects, in which a body of an email attached with the electronic document includes the message.

According to a fourteenth aspect of the present disclosure, there is provided an information processing apparatus including a processor configured to analyze a character string of a message accompanying an electronic document and perform processing relating to viewing of the electronic document on a basis of a result of an analysis.

According to a fifteenth aspect of the present disclosure, there is provided a method for processing information performed by a computer that manages an electronic document, the method including analyzing a character string of a message accompanying the electronic document on a basis of an operation performed by a user who views the electronic document and performing processing relating to viewing of the electronic document on a basis of a result of the analyzing.

According to the first aspect of the present disclosure, an operational burden on a reader can be reduced compared to when the reader needs to perform an operation in accordance with a message accompanying an electronic document.

According to the second aspect of the present disclosure, a user can determine a timing at which a message is analyzed.

According to the third aspect of the present disclosure, the processing can be performed through a simple operation.

According to the fourth aspect of the present disclosure, the processing can be performed after the user checks a character string.

According to the fifth aspect of the present disclosure, execution of the processing can be controlled in accordance with content of a character string.

According to the sixth aspect of the present disclosure, the execution of the processing can be controlled in accordance with a page number included in a character string.

According to the seventh aspect of the present disclosure, the user can check a character string more easily.

According to the eighth aspect of the present disclosure, the execution of the processing can be controlled in accordance with content of a character string.

According to the ninth aspect of the present disclosure, only a certain type of message is analyzed.

According to the tenth aspect of the present disclosure, the user can select a character string for which the processing is to be performed.

According to the eleventh aspect of the present disclosure, only a message managed by a database is analyzed.

According to the twelfth aspect of the present disclosure, a message can be sent by email.

According to the thirteenth aspect of the present disclosure, a message can be sent by email.

According to the fourteenth aspect of the present disclosure, an operational burden on the reader can be reduced compared to when the reader needs to perform an operation in accordance with a message accompanying an electronic document.

According to the fifteenth aspect of the present disclosure, an operational burden on the reader can be reduced compared to when the reader needs to perform an operation in accordance with a message accompanying an electronic document.

### Brief Description of the Drawings

Exemplary embodiments of the present disclosure will be described in detail based on the following figures, wherein:
Fig. 1 is a block diagram illustrating an example of the configuration of a document management system according to a first exemplary embodiment;
Figs. 2A and 2B are diagrams illustrating examples of management of data by a database: Fig. 2A illustrates an example of management of an electronic document, and Fig. 2B illustrates an example of management of information accompanying the electronic document;
Figs. 3A and 3B are diagrams illustrating examples of the hardware configuration of a document management apparatus and user terminals: Fig. 3A illustrates an example of the configuration of the document management apparatus, and Fig. 3B illustrates an example of the configuration of the user terminals;
Fig. 4 is a diagram illustrating an example of a functional configuration of the document management apparatus relating to viewing of electronic documents;
Fig. 5 is a diagram illustrating an example of a processing sequence performed by the document management system;
Fig. 6 is a diagram illustrating an example of an operation screen displayed on display devices of the user terminals;
Figs. 7A to 7C are diagrams illustrating how a handover message is added: Fig. 7A illustrates an example of a displayed thumbnail before the handover message is added, Fig. 7B illustrates an example of a screen used to input a handover message, and Fig. 7C illustrates an example of the displayed thumbnail after the handover message is added;
Figs. 8A to 8C are diagrams illustrating an example of an operation performed on a handover message: Fig. 8A illustrates an example of a displayed thumbnail to be viewed, Fig. 8B illustrates a state where an icon of a handover message is selected, and Fig. 8C illustrates an example of displayed content of the handover message;
Fig. 9 is a diagram illustrating an example of a screen displayed when a user has moved a mouse cursor over the icon of the handover message;
Fig. 10 is a diagram illustrating other examples of the handover message and the information to be displayed;
Figs. 11A to 11C are diagrams illustrating another example of the operation performed on a handover message: Fig. 11A illustrates an example of a displayed thumbnail to be viewed, Fig. 11B illustrates a state where an icon of the handover message has been selected, and Fig. 11C illustrates an example of displayed content of the handover message;
Figs. 12A and 12B are diagrams illustrating another example of the operation performed on a handover message: Fig. 12A illustrates a state where an icon of the handover message has been selected, and Fig. 12B illustrates an example of displayed content of the handover message;
Fig. 13 is a diagram in which parts of content of a handover message are underlined;
Fig. 14 is a diagram in which a part of content of a handover message is displayed in a different color;
Fig. 15 is a diagram illustrating an example of the configuration of a document management system according to a second exemplary embodiment;
Figs. 16A and 16B are diagrams illustrating screens displayed after an email to which a handover message is attached as a file is opened: Fig. 16A illustrates a state where the mouse cursor has been moved over a file indicating the handover message, and Fig. 16B illustrates a state where the handover message is displayed as a preview; and
Fig. 17 is a diagram illustrating a screen displayed by opening an email in which a handover message is written in a body of the email.

### Detailed Description

Exemplary embodiments of the present disclosure will be described hereinafter with reference to the drawings.

### First Exemplary Embodiment

### System Configuration

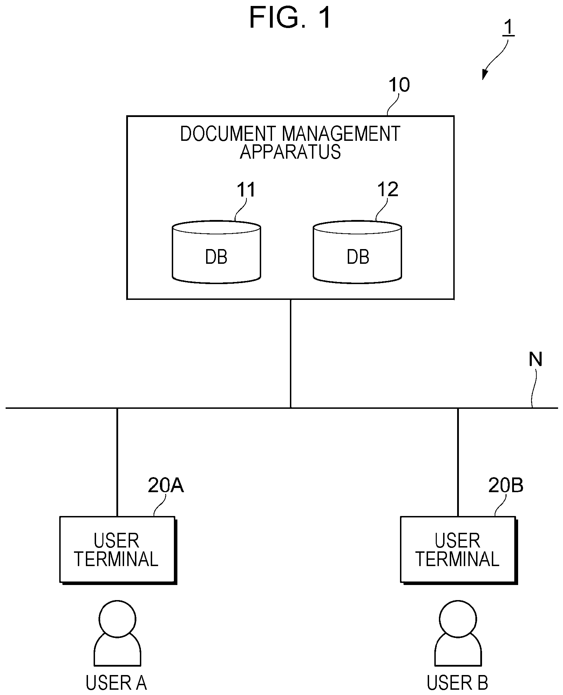

Fig. 1 is a diagram illustrating an example of the configuration of a document management system 1 according to a first exemplary embodiment.

The document management system 1 illustrated in Fig. 1 includes a document management apparatus 10 and user terminals 20A and 20B connected to a network N.

For convenience of description, the document management system 1 illustrated in Fig. 1 includes only the user terminal 20A used by a user A and the user terminal 20B used by a user B. The document management system 1, however, may include three or more user terminals, instead.

The user terminals 20A and 20B will be referred to as "user terminals 20" hereinafter when not distinguished from each other.

The document management apparatus 10 according to the present exemplary embodiment is a server terminal (hereinafter referred to as a "server") and used to manage electronic documents.

The document management apparatus 10 may be, for example, a file server or a database server, instead. The document management apparatus 10, however, may be a desktop terminal, a laptop terminal, a smartphone, a tablet terminal, or a wearable terminal, instead. That is, the document management apparatus 10 may be a terminal of any type insofar as the following functions can be performed.

The document management apparatus 10 need not be a single terminal, but may be a combination of a plurality of terminals, instead.

The document management apparatus 10 may be a cloud server or an intranet server, instead.

The management of electronic documents performed by the document management apparatus 10 includes, for example, storing of the electronic documents, storing of information accompanying the electronic documents, and management of viewing of the electronic documents. The information accompanying the electronic documents includes information indicating presence or absence of authority to read and write each of the electronic documents, attribute information regarding the electronic documents, histories of uploading and downloading of the electronic documents, histories of operations performed on the electronic documents, and histories of viewing of the electronic documents.

The document management apparatus 10 according to the present exemplary embodiment is provided with a database 11 used to store electronic documents and a database 12 used to manage information accompanying electronic documents.

The database 11 and/or the database 12 may be provided independently of the document management apparatus 10, instead. For example, the database 11 and the database 12 may be provided in the network N.

A message from a user to another user is an example of information accompanying an electronic document. In the present exemplary embodiment, therefore, messages are managed in an area different from one for electronic documents.

The document management apparatus 10 according to the present exemplary embodiment is an example of an information processing apparatus.

The user terminals 20 according to the present exemplary embodiment are desktop terminals or laptop terminals and used, for example, to view electronic documents. The user terminals 20, however, may be, for example, smartphones, tablet terminals, or wearable terminals, instead.

The network N may be, for example, a wired local area network (LAN) or a wireless LAN. The network N, however, may be the Internet, 5G, or another mobile communication system, instead.

The electronic documents according to the present exemplary embodiment are stored as files.

The electronic documents include, for example, documents created by application programs (hereinafter referred to as "apps" or "programs") and documents digitized by scanners.

The documents created by application programs include, for example, documents created by word processors, documents created by spreadsheet apps, documents created by presentation apps, documents created by email apps, and documents created by database apps.

The digitized documents include, for example, documents transmitted or received through facsimile and documents captured by cameras.

Content of the electronic documents includes, for example, text, images, programs, and various settings. The images may include thumbnails and screens for displaying search results.

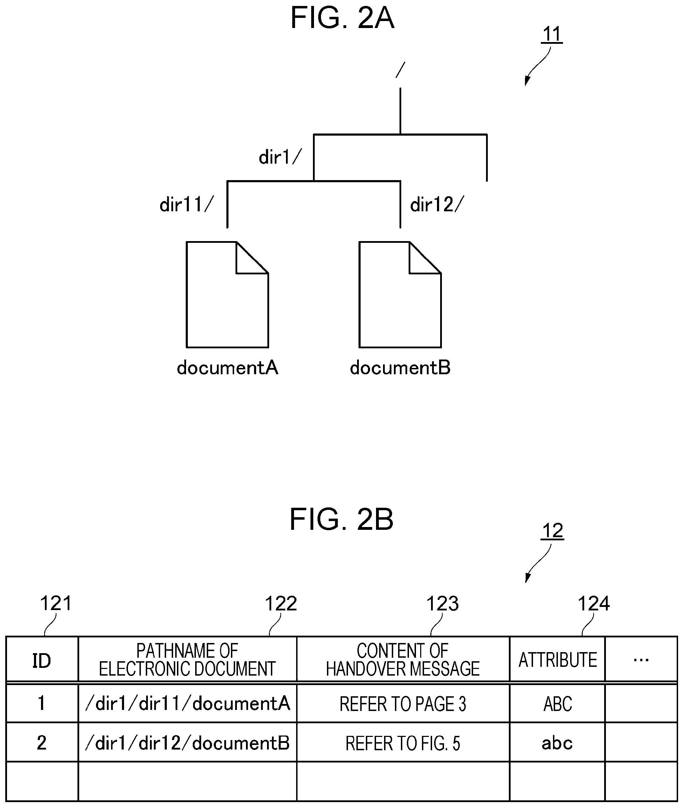

Figs. 2A and 2B are diagrams illustrating examples of management of data by the databases 11 and 12. Fig. 2A illustrates an example of management of electronic documents, and Fig. 2B illustrates an example of management of information accompanying the electronic documents.

As illustrated in Fig. 2A, the electronic documents are managed in a hierarchical structure. In Fig. 2A, electronic document A (i.e., documentA) is stored in an area identified with "/dir1/dir11/documentA".

The information accompanying the electronic documents is managed while being associated with identifiers (ID) of the corresponding electronic documents. In Fig. 2B, the electronic documents are managed using identifiers 121, pathnames 122 of the electronic documents, content 123 of handover messages, and attributes 124.

The messages are text added by users to the electronic documents and will also be referred to as "handover messages" hereinafter.

In the present exemplary embodiment, handover messages are stored in the database 12 while being associated with electronic documents in one-to-one correspondence. The handover messages are used to describe demands, requests, notes, and the like to users who view the electronic documents.

In the present exemplary embodiment, handover messages are assumed to be viewed by other users who share electronic documents. When the users A and B share the electronic document "documentA", for example, the user A registers a handover message, and the user B who views the registered electronic document "documentA" checks the accompanying handover message.

Alternatively, the user A may register a handover message in order to view the handover message himself/herself later. A handover message, however, need not assume a particular reader.

A handover message is an example of a message accompanying an electronic document. A text message included in a handover message is an example of a character string.

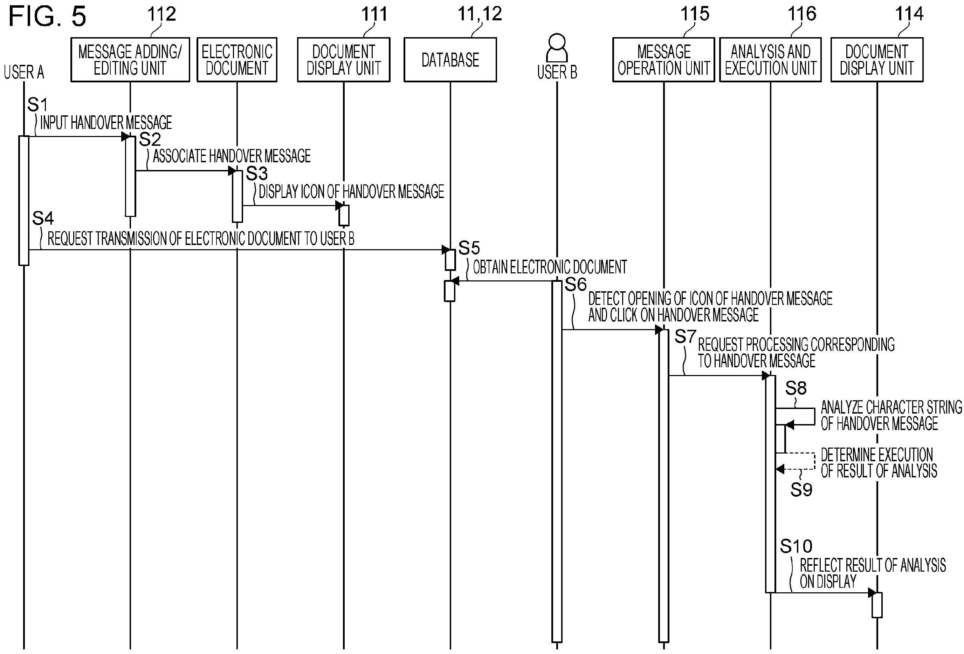

In Fig. 2B, "Refer to page 3" is stored for the electronic document "documentA", whose identifier 121 is "1", as content 123 of a handover message. "Refer to Fig. 5" is stored for the electronic document "documentB", whose identifier 121 is "2", as content 123 of a handover message. The content 123 is text messages included in the handover messages.

### Configuration of Terminals

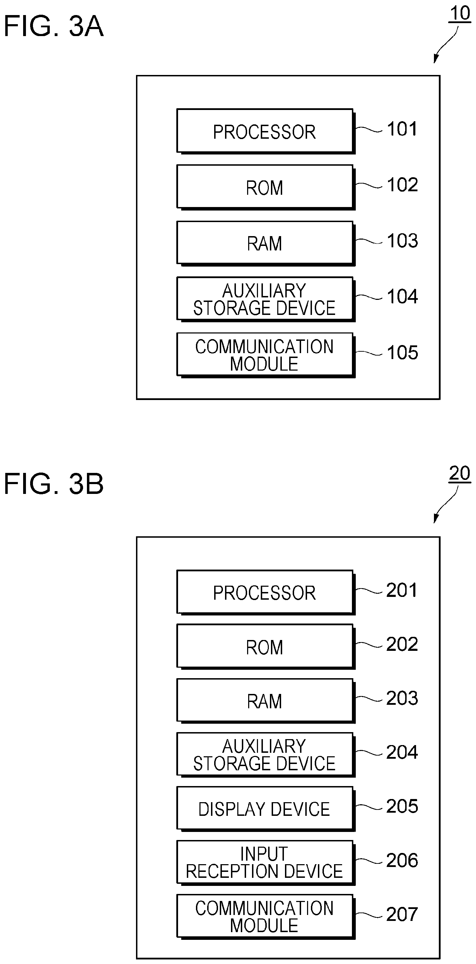

Figs. 3A and 3B are diagrams illustrating an example of the hardware configuration of the document management apparatus 10 and the user terminals 20. Fig. 3A illustrates an example of the configuration of the document management apparatus 10, and Fig. 3B illustrates an example of the configuration of the user terminals 20.

The document management apparatus 10 illustrated in Fig. 3A includes a processor 101 that controls the operation of the entirety of the document management apparatus 10, a read-only memory (ROM) 102 storing a basic input/output system (BIOS) and the like, a random-access memory (RAM) 103 used as a working area of the processor 101, an auxiliary storage device 104, and a communication module 105. The processor 101 and the other devices are connected to each other through a signal line such as a bus.

The processor 101, the ROM 102, and the RAM 103 function as a so-called computer.

The processor 101 achieves various functions by executing programs. For example, the processor 101 performs processing relating to management of electronic documents.

The auxiliary storage device 104 is, for example, a hard disk device or a semiconductor storage. The auxiliary storage device 104 is used to store programs such as an operating system (OS) and the databases 11 and 12 (refer to Fig. 1) .

The communication module 105 is a device for achieving communication with the user terminals 20 and the like connected to the network N. The communication module 105 conforms to Ethernet (registered trademark), Wi-Fi (registered trademark), or any other communication standard.

The user terminal 20 illustrated in Fig. 3B includes a processor 201 that controls the entirety of the user terminal 20, a ROM 202 storing a BIOS and the like, a RAM 203 used as a working area of the processor 201, an auxiliary storage device 204, a display device 205, an input reception device 206, and a communication module 207. The processor 201 and the other devices are connected to each other through a signal line such as a bus.

The processor 201, the ROM 202, and the RAM 203 function as a so-called computer.

The processor 201 achieves various functions by executing programs. For example, the processor 201 performs processing relating to viewing of electronic documents. Because the user terminal 20 according to the present exemplary embodiment is not dedicated to viewing of electronic documents, the processor 201 performs processing other than that for the viewing.

The auxiliary storage device 204 is, for example, a hard disk device or a semiconductor storage. The auxiliary storage device 204 stores programs such as an OS, electronic documents, and the like.

The display device 205 is, for example, a liquid crystal display or an organic electroluminescent (EL) display. The display device 205 displays electronic documents for which operations are to be performed. The electronic documents here are not limited to ones shared by a plurality of users.

The input reception device 206 receives, for example, inputs from the user who uses a keyboard and a mouse. The input reception device 206 receives inputs such as a position and movement of a mouse cursor and a click of the mouse.

The communication module 207 achieves communication with the user terminals 20 and the like connected to the network N. The communication module 207 conforms to Ethernet (registered trademark), Wi-Fi (registered trademark), or any other communication standard.

### Functions Relating to Viewing of Electronic Documents

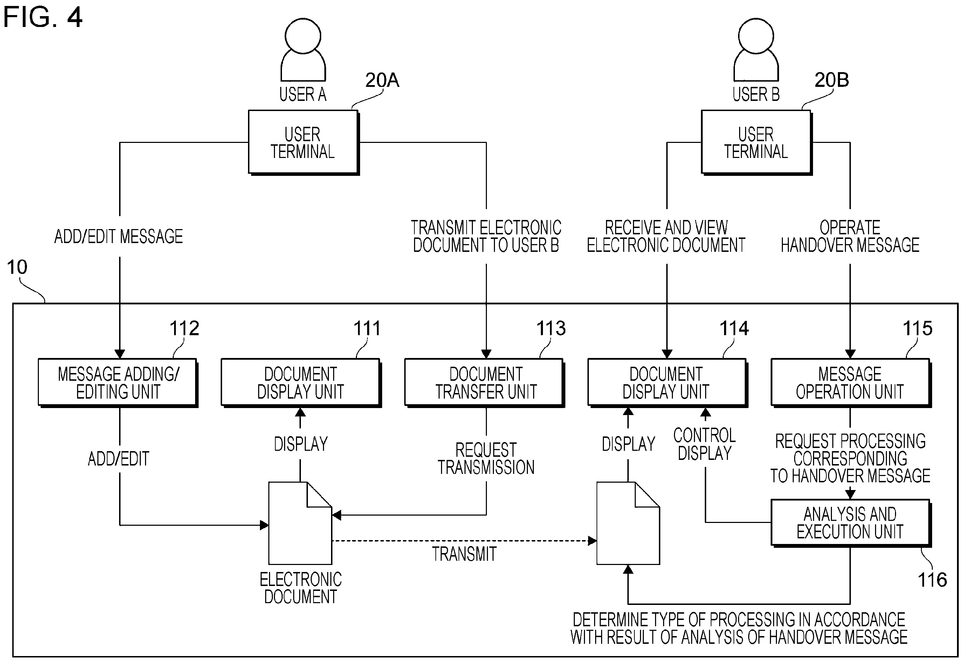

Fig. 4 is a diagram illustrating an example of a functional configuration of the document management apparatus 10 relating to viewing of electronic documents.

Fig. 4 also illustrates the user terminals 20A and 20B corresponding to the users A and B, respectively, who share electronic documents.

Details of functional units will be described hereinafter in relation to inputs made by the users A and B. The functional units are achieved by executing programs using the processor 101.

A document display unit 111, a message adding/editing unit 112, and a document transfer unit 113 are functional units relating to operations performed by the user A, who sends an electronic document.

The document display unit 111 is a functional unit that displays, on the display device 205 (refer to Fig. 3) of the user terminal 20A, an electronic document to be viewed. The electronic document to be viewed is selected using the user terminal 20A.

The message adding/editing unit 112 is a functional unit that receives addition and editing of handover messages. The addition and editing of handover messages are performed on a screen displayed on the display device 205 of the user terminal 20A.

When the message adding/editing unit 112 receives a handover message to be added, the message adding/editing unit 112 stores the handover message in a corresponding area of the database 12 (refer to Fig. 1).

When the message adding/editing unit 112 receives a handover message to be edited, the message adding/editing unit 112 updates data stored in the database 12 (refer to Fig. 1) with the edited handover message.

The document transfer unit 113 is a functional unit that receives transmission of an electronic document to the user B. In the present exemplary embodiment, the user B, who is a destination of the electronic document, is notified only that transmission of an electronic document from the user A has been received. The user B is notified, for example, of a directory path indicating where the electronic document is stored. An email or a short message, for example, is used for the notification.

If an electronic document to be transmitted is not stored in the database 11, the document transfer unit 113 obtains the electronic document from the user terminal 20A and stores the electronic document in the database 11 (refer to Fig. 1).

A document display unit 114, a message operation unit 115, and an analysis and execution unit 116 are functional units relating to operations performed by the user B, to whom an electronic document is sent.

The document display unit 114 is a functional unit that displays the electronic document received from the user A on the display device 205 (refer to Fig. 3) of the user terminal 20B. If a handover message is added to the electronic document, the display device 205 also indicates presence of the handover message.

The document display unit 114 also displays a result of processing according to an operation performed on the handover message. The result of the processing according to the operation is given from the analysis and execution unit 116.

The message operation unit 115 is a functional unit that receives operations performed on handover messages.

If a received operation is a predetermined operation performed on a handover message, the message operation unit 115 requests the analysis and execution unit 116 to perform processing according to the handover message.

The predetermined operation may be, for example, moving a mouse cursor over the handover message, selecting the handover message, or opening the handover message.

The predetermined operation, however, may be an operation performed on a text message written in the handover message, instead. The predetermined operation may be, for example, selecting the text message written in the handover message, instead.

If the handover message includes a plurality of text messages, the predetermined operation may be selection of one of the plurality of text messages.

The analysis and execution unit 116 is a functional unit having a function of analyzing text messages included in handover messages and a function of executing processing relating to viewing of electronic documents on the basis of results of the analyses. In the following description, the function of analyzing text messages will be referred to as an "analysis unit", and the function of executing processing relating to viewing of electronic documents will be referred to as an "execution unit".

The analysis unit analyzes text messages included in a handover message and gives a result of the analysis to the execution unit. For the analysis, natural language processing typified by a morphological analysis is used.

The analysis unit might analyze all text messages included in a handover message, only specified text messages, or only a specified part of a text message.

If a result of an analysis of a selected handover message specifies processing relating to viewing of an electronic document, the execution unit performs the processing. That is, the execution unit controls display of the electronic document viewed by the user B.

In other words, the execution unit performs processing relating to viewing of an electronic document if the execution unit detects a predetermined operation.

Although the functions of the message operation unit 115 and the analysis and execution unit 116 are separate from each other in the present exemplary embodiment, the functions need not be separated from each other as specific functions.

If a result of an analysis of a selected handover message does not specify processing relating to viewing of an electronic document, on the other hand, the execution unit does not control display of an electronic document. When the execution unit does not control display of an electronic document, the display of the electronic document depends on only an operation performed by a user who is viewing the electronic document.

Cases where a result of an analysis of a selected handover message specifies processing relating to viewing of an electronic document include, for example, a case where a range of users who share the electronic document is specified or notes on transmission of the electronic document to the outside are specified.

### Processing Sequence

Fig. 5 is a diagram illustrating an example of a processing sequence performed by the document management system 1. A sign "S" in Fig. 5 denotes a step.

First, the user A who uses the user terminal 20A (refer to Fig. 1) inputs a handover message (step 1). For example, "Refer to page 3" is input.

The input is given to the message adding/editing unit 112 from the user terminal 20A.

After the input is confirmed, the message adding/editing unit 112 associates the handover message with a selected electronic document (step 2). More specifically, content 123 of the handover message is stored in the database 12 (refer to Fig. 2B).

After the handover message is associated with the electronic document, the document display unit 111 display an icon of the handover message (step 3). Although the icon of the handover message is displayed near the electronic document with which the handover message is associated in the present exemplary embodiment, the electronic document may be displayed in a mode different from one for other electronic documents with which a handover message is not associated. For example, a color or luminance of a frame of the electronic document may be displayed differently. Step 3 need not be performed, and the icon or the like may be displayed if the electronic document is selected as an operation target, instead.

In the example illustrated in Fig. 5, the user A who uses the user terminal 20A then requests transmission of the electronic document to the user B (step 4). The request is given, for example, to the database 11. The database 11 notifies the user B of the transmission of the electronic document through an email or the like, which is not illustrated.

The processing performed for the user A, who sends an electronic document, has been described.

Next, the user B obtains the electronic document from the database 11 by operating the user terminal 20B (step 5).

If a handover message is added to the obtained electronic document, the document display unit 114 displays an icon indicating the handover message on a screen.

The message operation unit 115 detects the user B's click on the handover message. More specifically, the message operation unit 115 detects opening of the icon of the handover message and a click on the handover message (step 6).

After detecting these operations, the message operation unit 115 requests the analysis and execution unit 116 to perform processing according to the handover message (step 7) .

Upon receiving the request, the analysis and execution unit 116 analyzes a character string of the handover message (step 8) and determines execution of the result of the analysis (step 9).

The analysis and execution unit 116 then controls the document display unit 114 to display the result of the analysis (step 10).

### Example of Operation Screens

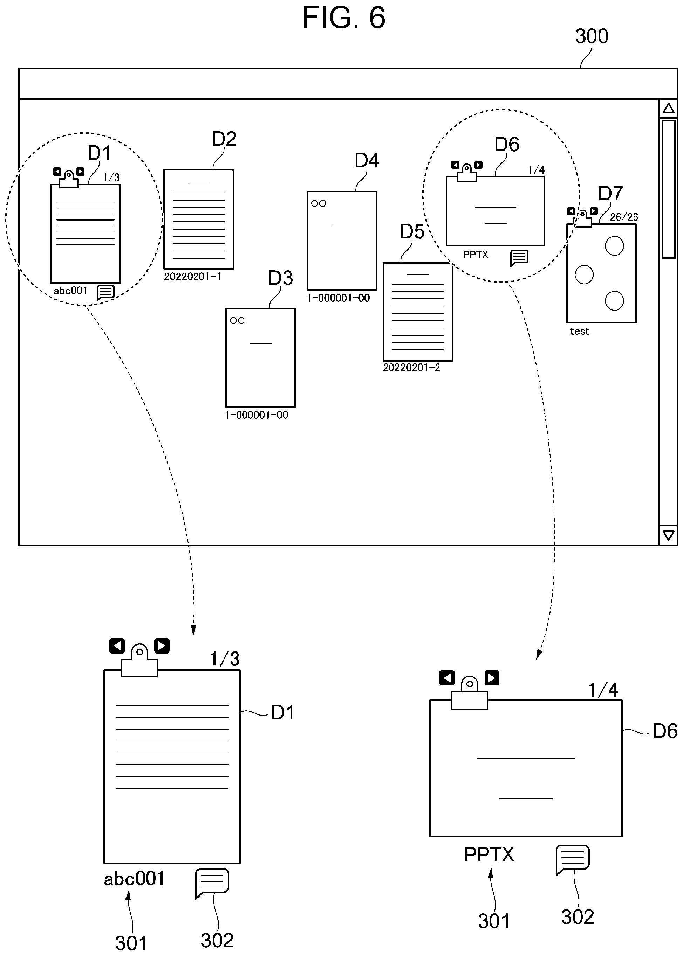

An example of operation screens displayed as a handover message is executed will be described hereinafter with reference to Figs. 6 to 14.

### List Screen

Fig. 6 is a diagram illustrating an example of an operation screen 300 displayed on the display devices 205 (refer to Fig. 3) of the user terminals 20. The operation screen 300 is displayed on both the user terminal 20A and the user terminal 20B.

In Fig. 6, thumbnails corresponding to some of electronic documents managed by the document management apparatus 10 (refer to Fig. 1) are displayed as a list. In Fig. 6, thumbnails representing the electronic documents are given reference numerals D1 to D7, respectively. The electronic documents, however, need not be displayed as thumbnails. For example, the electronic documents may be displayed as tables, instead. The thumbnails D1 to D7 will be referred to as "thumbnails D" hereinafter when the corresponding electronic documents are not distinguished from one another.

In Fig. 6, images of first pages or the like of the electronic documents are displayed as the thumbnails D.

The electronic documents corresponding to the thumbnails D with an icon of a clip include a plurality of pages. The electronic documents corresponding to the thumbnails D without an icon of a clip include only one page.

In the operation screen 300 illustrated in Fig. 6, there are two electronic documents to which a handover message is added. More specifically, a handover message is added to the thumbnails D1 and D6.

Icons 302 indicating the handover messages are displayed only for these thumbnails D1 and D6 along with document names 301.

In Fig. 6, the icons 302 have a shape of a balloon. The user can easily understand which electronic documents a handover message is added to on the basis of presence or absence of a balloon-shaped icon 302. The shape of the icons 302 is an example.

The icon 302 indicating a handover message is desirably displayed in color. When a colored icon is displayed, the user is more likely to notice that a handover message is added.

### Addition of Handover Message by User A

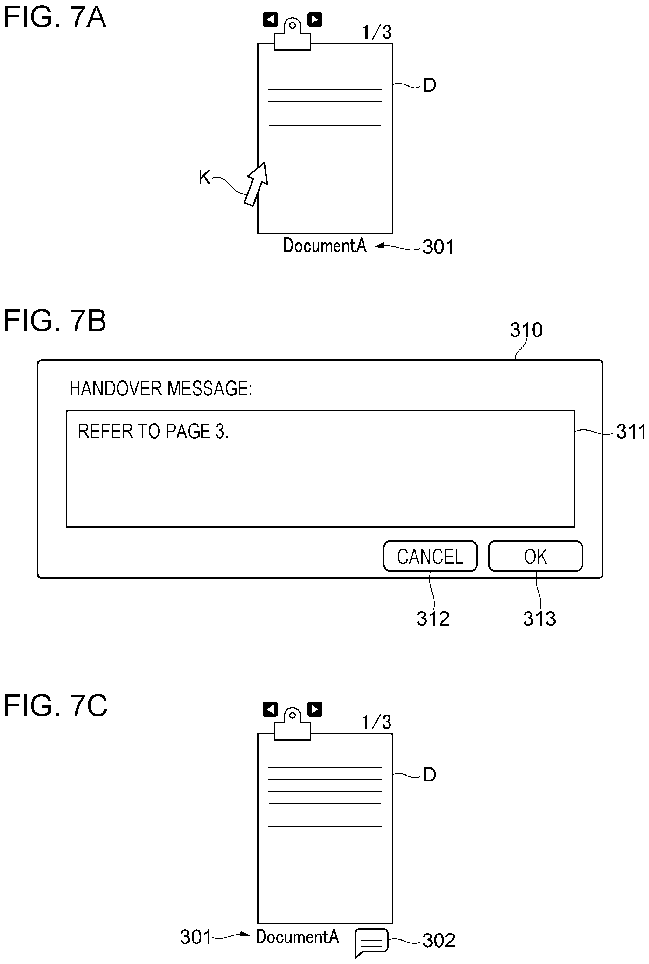

Figs. 7A to 7C are diagrams illustrating how a handover message is added. Fig. 7A illustrates an example of a displayed thumbnail D before the handover message is added. Fig. 7B illustrates an example of a screen 310 used to input a handover message. Fig. 7C illustrates an example of the displayed thumbnail D after the handover message is added.

That is, the information illustrated in Figs. 7A to 7C is displayed on the display device 205 (refer to Fig. 3) of the user terminal 20A (refer to Fig. 1) used by the user A.

Fig. 7A illustrates a state where a thumbnail D of an electronic document whose document name 301 is "Document A" has been selected as an operation target using a mouse cursor K.

The screen 310 illustrated in Fig. 7B is displayed when addition of a handover message is requested using a button that is not illustrated or a right click. The screen 310 illustrated in Fig. 7B includes an input field 311 for a handover message, a cancel button 312, and an OK button 313 for confirming an input.

In the screen 310, a character string "Refer to page 3" is input. If the OK button 313 is used in this state, for example, a screen for inputting a destination is displayed. After the input destination is confirmed, the electronic document is transmitted. The character string input in the screen 310 is registered to the database 12 (refer to Fig. 2B) while being associated with the electronic document.

An icon 302 indicating the handover message is added to the thumbnail D illustrated in Fig. 7C.

### Operation Performed by User B on Handover Message

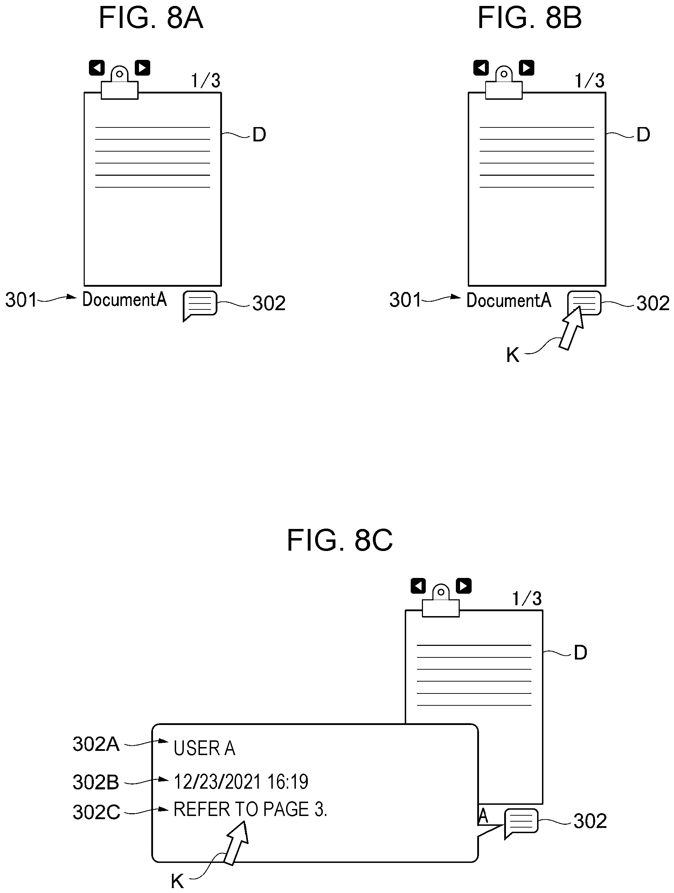

Figs. 8A to 8C are diagrams illustrating an example of an operation performed on a handover message. Fig. 8A illustrates an example of a displayed thumbnail D to be viewed. Fig. 8B illustrates a state where an icon 302 of the handover message is selected. Fig. 8C illustrates an example of displayed content of the handover message.

That is, the information illustrated in Figs. 8A to 8C is displayed on the display device 205 (refer to Fig. 3) of the user terminal 20B (refer to Fig. 1) used by the user B.

In Fig. 8A, an icon 302 indicating a handover message is displayed under the thumbnail D. The user B, therefore, can understand in advance that a handover message is added to the electronic document to be viewed.

Fig. 8B illustrates a state where the mouse cursor K has been moved over the icon 302 indicating the handover message.

In the present exemplary embodiment, the handover message is opened by moving the mouse cursor K over the icon 302. When the mouse cursor K over the icon 302 is detected, therefore, the information illustrated in Fig. 8C is displayed.

Fig. 8C illustrates content of the icon 302. That is, Fig. 8C illustrates a state where the handover message is open.

In Fig. 8C, a creator 302A of the handover message, a time 302B at which the handover message has been created, and content 302C of the handover message are illustrated.

In this example, the creator 302A of the handover message is the "user A", the time 302B of the creation is "12/23/2021 16:19", and the content 302C is "Refer to page 3".

In Fig. 8C, an analysis of the content 302C and corresponding processing (hereinafter referred to as the "analysis and the like") are performed by moving the mouse cursor K over the content 302C.

Alternatively, the processor 201 (refer to Fig. 3) may perform the analysis of the content 302C and the like by moving the mouse cursor K over the icon 302. In this case, the information illustrated in Fig. 8C need not be displayed.

As illustrated in Fig. 8C, however, when the analysis of the handover message and the like are performed by moving the mouse cursor K over the content 302C, the user B can select a timing of the analysis and the like.

Although the user B needs to perform an explicit operation on the content 302C in order to execute the content 302C in Fig. 8C, the analysis of a handover message and the like may be performed by moving the mouse cursor K over a thumbnail D of an electronic document.

### Execution of Processing Based on Operation Performed by User B

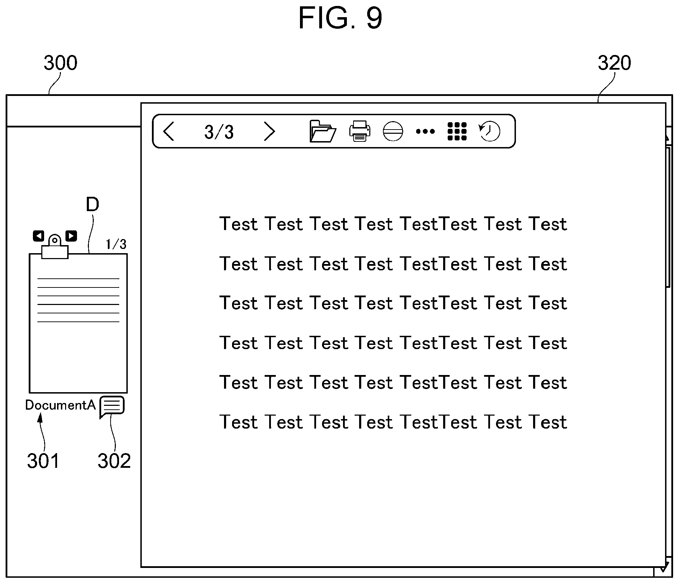

Fig. 9 is a diagram illustrating an example of a screen displayed when the user B has moved the mouse cursor K over the icon 302 (refer to Fig. 8C) of the handover message.

Fig. 9 illustrates a state where the processor 201 (refer to Fig. 3) has displayed page 3 of the electronic document as a preview to the right of the thumbnail D corresponding to the electronic document "DocumentA" selected in the operation screen 300 as an operation target.

The preview refers to a function of displaying content of the electronic document without opening the electronic document using a program. In other words, the content of the electronic document is displayed without opening the electronic document through an operation performed by the user B.

The user B, therefore, need not open the electronic document "DocumentA" and scroll to page 3 in order to view page 3 of the electronic document illustrated in Fig. 9. As a result, an operational burden on the user B is reduced.

In addition, the user B can view an item for which the user A, who sends the electronic document "DocumentA", seeks the user B's viewing, for example, just by moving the mouse cursor K over the icon 302 or the content 302C.

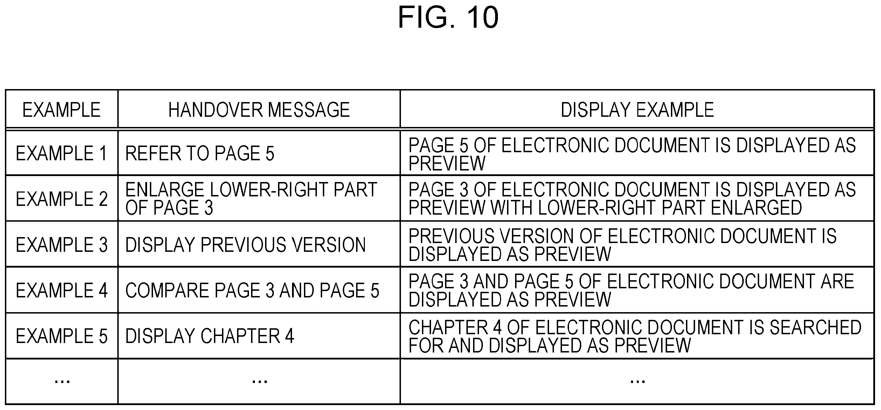

Fig. 10 is a diagram illustrating other examples of the handover message and the information to be displayed. Fig. 10 illustrates five examples.

In example 1, the handover message is "Refer to page 5 of electronic document". In this case, only a page to be referred to is different from the above-described example. In this example, page 5 is displayed as a preview.

In example 2, the handover message is "Enlarge lower-right part of page 3". In this case, a lower-right part of page 3 of the electronic document is displayed as a preview in an enlarged manner.

In example 3, the handover message is "display previous version". In this case, an electronic document of a previous version is displayed as a preview.

In example 4, the handover message is "compare page 3 and page 5". In this case, page 3 and page 5 of the electronic document are displayed as a preview. In this example, the user B need not separately open the two pages and arrange the two pages side-by-side.

In example 5, the handover message is "display chapter 4". In this case, chapter 4 of the electronic document is displayed as a preview.

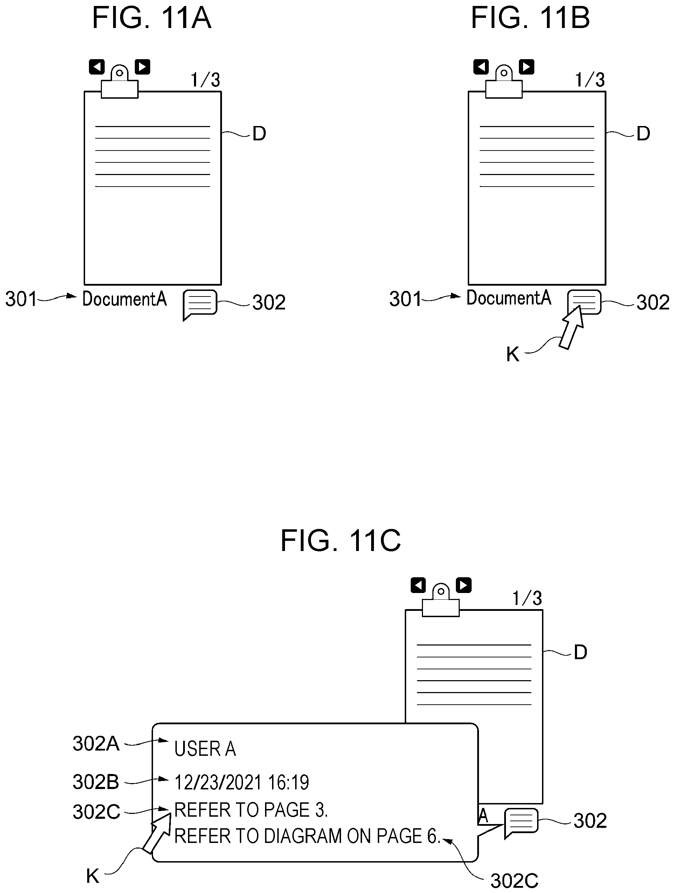

Figs. 11A to 11C are diagrams illustrating another example of the operation performed on a handover message. Fig. 11A illustrates an example of a displayed thumbnail D to be viewed. Fig. 11B illustrates a state where an icon 302 of the handover message has been selected. Fig. 11C illustrates an example of displayed content of the handover message. In Figs. 11A to 11C, the same components as in Figs. 8A to 8C are given the same reference numerals.

Figs. 11A and 11B are the same as Figs. 8A and 8B, respectively.

In Fig. 11C, the handover message includes two pieces of content 302C. In Fig. 11C, the handover message includes "Refer to page 3" and "Refer to diagram on page 6".

When two pieces of content 302C are written in different rows as in Fig. 11C, only a piece of content 302C over which the mouse cursor K has been moved is performed.

In the example illustrated in Fig. 11c, only processing corresponding to the upper piece of the content 302C "Refer to page 3" is performed. That is, page 3 of the electronic document is displayed on the screen as a preview.

If the mouse cursor K is then moved over the lower piece of the content 302C "Refer to diagram on page 6" in Fig. 11C, page 6 is displayed on the screen as a preview.

When the mouse cursor K is moved over any piece of the content 302C, however, processing corresponding to the two pieces of the content 302C may be sequentially performed. At this time, the two pieces of the content 302C may be sequentially performed from the top to the bottom regardless of a row over which the mouse cursor K has been detected. In this case, the processing corresponding to the upper piece of the content 302C is performed, and then the processing corresponding to the lower piece of the content 302C is performed.

Alternatively, the processing corresponding to a piece of the content 302C over which the mouse cursor K has been moved may be performed first, and then the processing corresponding to a remaining piece of the content 302C may be performed a predetermined period of time later.

For example, one minute after a preview is displayed for a first piece of the content 302C, processing corresponding to a remaining piece of the content 302C may be performed even if the mouse cursor K is not moved over the remaining piece of the content 302C.

Alternatively, when a predetermined period of time has elapsed since a preview was displayed for the first piece of the content 302C, a pop-up window or the like for notifying the user B of presence of the other piece of the content 302C for which processing has not been performed may be displayed.

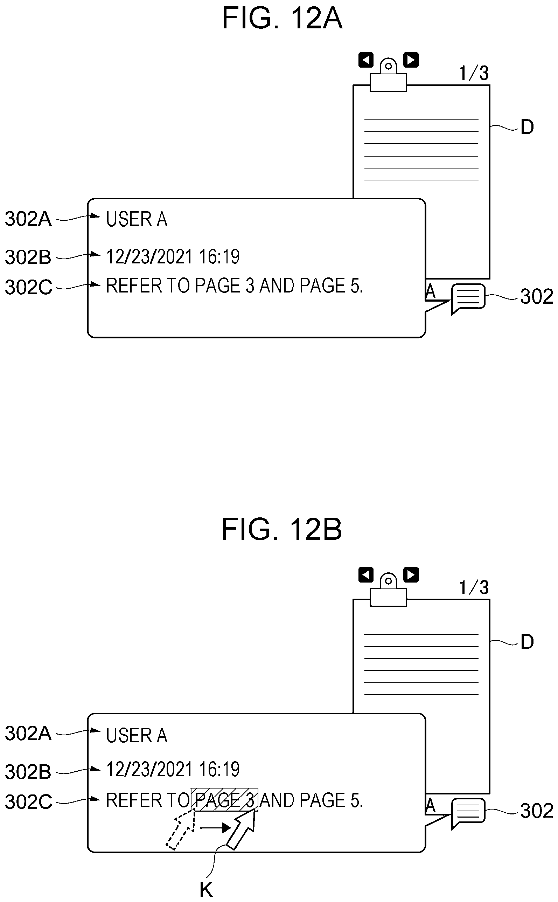

Figs. 12A and 12B are diagrams illustrating another example of the operation performed on a handover message. Fig. 12A illustrates a state where an icon 302 of the handover message has been selected. Fig. 12B illustrates an example of displayed content of the handover message. In Figs. 12A and 12B, the same components as in Figs. 8A to 8C are given the same reference numerals.

In the example illustrated in Fig. 12A, content 302C of the handover message is written in one row but includes two items.

In other words, the content 302C includes a plurality of pieces of content. In the example illustrated in Fig. 12A, the content 302C is "Refer to page 3 and page 5", that is, there are two pages to be referred to.

A plurality of pages can be displayed side-by-side, but in Fig. 12B, processing to be performed is specified. In Fig. 12B, "page 3" is selected through dragging of the mouse. In this case, only page 3 is displayed as a preview. By specifying a range, processing to be performed can be specified.

### Other Examples of Displayed Content 302C of Handover Message

Although every character included in the content 302C is displayed in the same display mode in the above examples, characters indicating content relating to viewing may be displayed differently from other characters.

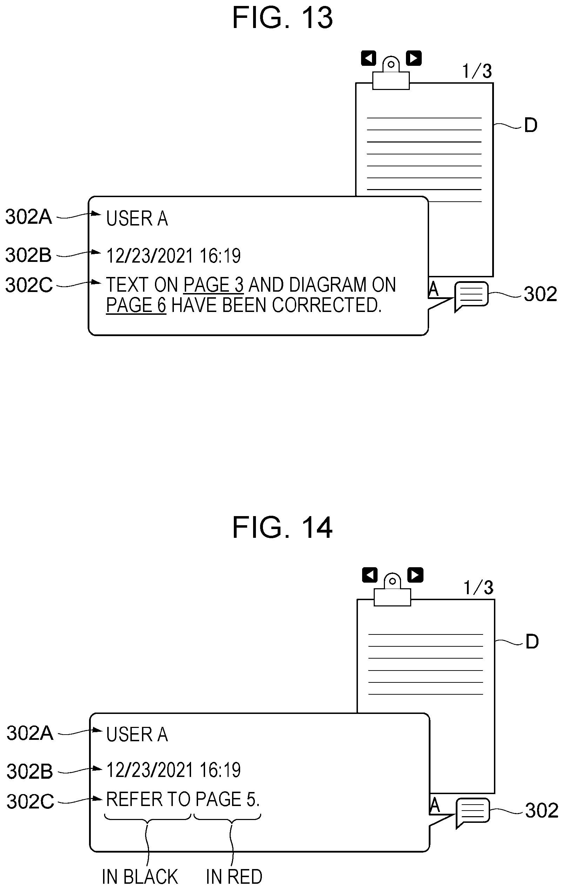

Fig. 13 is a diagram in which parts of content 302C of a handover message are underlined. The content 302C illustrated in Fig. 13 is "Text on page 3 and diagram on page 6 have been corrected". Two parts "page 3" and "page 6" are underlined.

Fig. 14 is a diagram in which characters of content 302C of a handover message indicating content relating to viewing are displayed in a different color. The content 302C illustrated in Fig. 14 is "Refer to page 5". The part "page 5" is displayed in red, and "Refer to" is displayed in black.

The display modes illustrated in Figs. 13 and 14 are examples, and only characters indicating content relating to viewing may be expressed in bold, increased in size, or changed in background color, instead. These are examples of a display mode different from one for other characters.

### Second Exemplary Embodiment

In a second exemplary embodiment, a case where a handover message is attached to an email will be described.

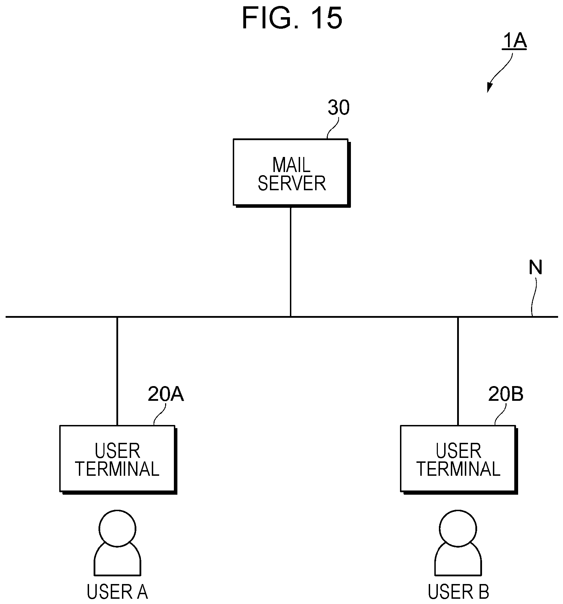

Fig. 15 is a diagram illustrating an example of the configuration of a document management system 1A according to the second exemplary embodiment. In Fig. 15, the same components as in Fig. 1 are given the same reference numerals.

The document management system 1A illustrated in Fig. 15 includes a mail server 30 instead of the document management apparatus 10 (refer to Fig. 1). In the present exemplary embodiment, the mail server 30 transmits an email from the user A, who uses the user terminal 20A, to the user B, who uses the user terminal 20B.

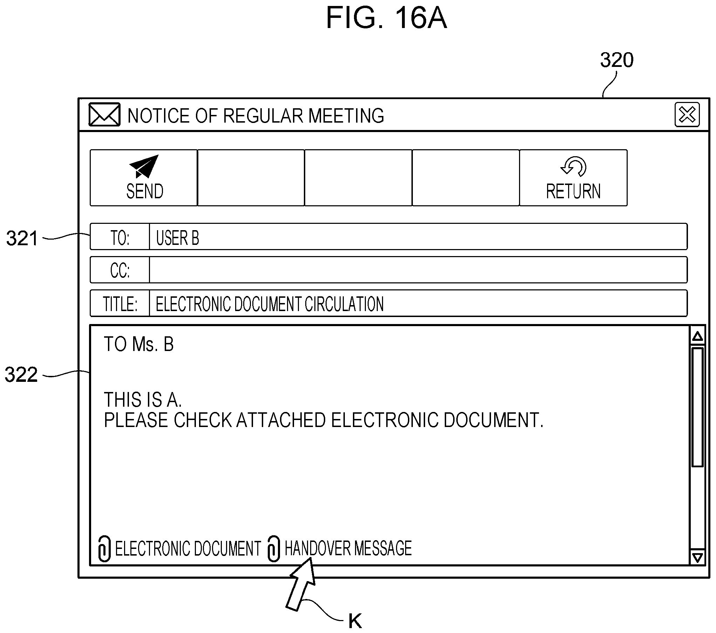

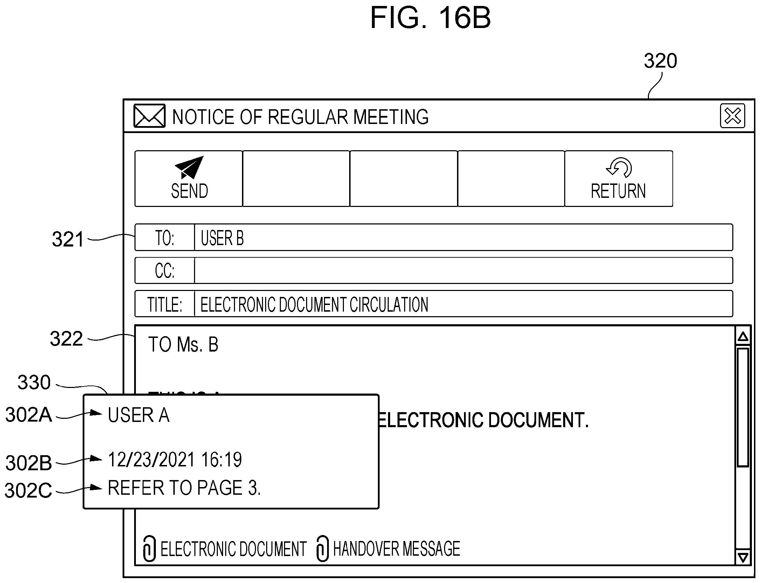

Figs. 16A and 16B are diagrams illustrating screens displayed after an email to which a handover message is attached as a file is opened. Fig. 16A illustrates a state where the mouse cursor K has been moved over the file indicating the handover message. Fig. 16B illustrates a state where the handover message is displayed as a preview.

In the present exemplary embodiment, a program for achieving the functions of the document management apparatus 10 (refer to Fig. 1), namely the document display unit 114, the message operation unit 115, and the analysis and execution unit 116 (refer to Fig. 4), is installed on the user terminal 20B. The user terminal 20B according to the present exemplary embodiment is an example of an information processing apparatus.

Fig. 16A illustrates an example of a screen 320 displayed by opening the email. An address 321 is the user B, and character strings "To Ms. B" and "This is A. Please check attached electronic document" are input as a body 322.

Attached files are the electronic document and the handover message. The handover message in the present exemplary embodiment is a file. The handover message is associated with the electronic document in one-to-one correspondence.

In Fig. 16A, the mouse cursor K has been moved over the handover message. The attached file, however, may be opened through a double click with the mouse cursor K over the handover message, instead.

Fig. 16B illustrates a state where the mouse cursor K has been moved over the attached file, namely the handover message, to display a preview 330 of the handover message. Displayed information is the same as in Fig. 8C. That is, a creator 302A of the handover message, a time 302B at which the handover message has been created, and content 302C of the handover message are displayed in the preview 330. In this example, however, the creator 302A is the same as the sender of the email, and the time 302B is the same as the time of the sending.

### Third Exemplary Embodiment

In a third exemplary embodiment, a case where a handover message is written in a body of an email will be described.

The present exemplary embodiment, too, assumes the document management system 1A illustrated in Fig. 15.

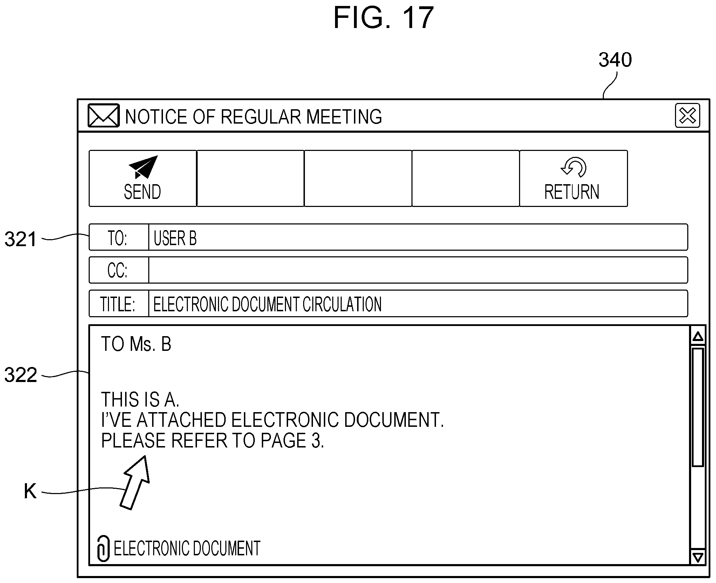

Fig. 17 is a diagram illustrating a screen 340 displayed by opening an email in which a handover message is written in a body of the email.

An address 321 of the screen 340 illustrated in Fig. 17 is the user B. Character strings "To Ms. B" and "This is A. I've attached electronic document. Please refer to page 3" are input as a body 322.

In Fig. 17, a preview of page 3 of the attached electronic document is displayed by moving the mouse cursor K over a character string of the handover message. The handover message in the body 322 and the attached electronic document are associated with each other in one-to-one correspondence.

### Other Exemplary Embodiments

(1) Although exemplary embodiments of the present disclosure have been described, the technical scope of the present disclosure is not limited to the exemplary embodiments. It is evident from the claims that the technical scope of the present disclosure also includes various modifications and improvements of the exemplary embodiments.
(2) Although content of a text message constituting a handover message is analyzed through natural language processing in the above exemplary embodiments, a certain character string included in a handover message may be recognized and predetermined processing may be performed, instead.
   The certain character string may be, for example, a page number. The page number is not a simple number but a character string indicating page 3 of an electronic document, such as "P3", "p.3", "page 3", "3rd page", or "third page". Such character string are registered in advance. If a handover message includes one of these character strings, page 3 of an electronic document may be displayed as a preview or opened and displayed. Processing for finding a certain character string, too, is an example of the "analysis".
(3) Although the mail server 30 (refer to Fig. 15) is provided instead of the document management apparatus 10 (refer to Fig. 1) in the second and third exemplary embodiments, the document management apparatus 10 may be provided as in the first exemplary embodiment, and, for example, the document management apparatus 10 may perform the functions relating to the analysis and the execution of a handover message, instead.
(4) In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. A program causing a computer to execute a process comprising:
analyzing a character string of a message accompanying an electronic document; and
performing processing relating to viewing of the electronic document on a basis of a result of the analyzing.

2. The program according to Claim 1,
wherein, in the performing, the processing relating to the viewing of the electronic document is performed on condition that a predetermined operation is detected.

3. The program according to Claim 2,
wherein the predetermined operation is selecting or opening of the message.

4. The program according to Claim 2,
wherein the predetermined operation is selecting of the character string included in the message.

5. The program according to any one of Claims 1 to 4,
wherein, in the performing, if the character string includes content relating to the viewing of the electronic document, the processing is performed.

6. The program according to Claim 5,
wherein, in the performing, if the character string includes a page number, processing for displaying a corresponding page of the electronic document is displayed.

7. The program according to Claim 5 or 6, the process further comprising:
displaying characters of the character string indicating the content relating to the viewing of the electronic document in a display mode different from a display mode for other characters of the character string.

8. The program according to Claim 1 or 5,
wherein, in the performing, if the character string does not include content relating to the viewing of the electronic document, the processing is not performed.

9. The program according to any one of Claims 1 to 8,
wherein the message is associated with the electronic document in one-to-one correspondence.

10. The program according to any one of Claims 1 to 9,
wherein, in the performing, the processing relating to the viewing of the electronic document is performed on a basis of a result of an analysis of a certain character string specified by a user.

11. The program according to any one of Claims 1 to 10,
wherein a database manages association between the message and the electronic document.

12. The program according to any one of Claims 1 to 10,
wherein the message is a file and attached to an email along with the electronic document.

13. The program according to any one of Claims 1 to 10,
wherein a body of an email attached with the electronic document includes the message.

14. An information processing apparatus comprising:
a processor configured to:
analyze a character string of a message accompanying an electronic document; and
perform processing relating to viewing of the electronic document on a basis of a result of an analysis.

15. A method for processing information performed by a computer that manages an electronic document, the method comprising:
analyzing a character string of a message accompanying the electronic document on a basis of an operation performed by a user who views the electronic document; and
performing processing relating to viewing of the electronic document on a basis of a result of the analyzing.
